# EUROPEAN PATENT SPECIFICATION

(11) **EP 2 195 210 B1**
(45) Date of publication and mention of the grant of the patent: **17.04.2013**
(21) Application number: 07849048.9
(22) Date of filing: 25.09.2007
(51) Int. Cl.: B60R 25/04, B60R 25/08, H04L 12/46

(54) **ELECTRONIC CONTROL SYSTEM AND METHOD FOR PREVENTING UNAUTHORIZED STARTING, USE OR MOVEMENT OF AN AUTOMOTIVE VEHICLE, VEHICLE EQUIPPED WITH SUCH A SYSTEM**
ELEKTRONISCHES STEUERSYSTEM UND -VERFAHREN ZUM VERHINDERN EINES NICHT AUTORISIERTEN STARTENS, DER VERWENDUNG ODER BEWEGUNG EINES KRAFTFAHRZEUGS, MIT SOLCH EINEM SYSTEM AUSGESTATTETES FAHRZEUG
PROCÉDÉ ET SYSTÈME DE COMMANDE ÉLECTRONIQUE POUR EMPÊCHER LE DÉMARRAGE, L'UTILISATION OU LE DÉPLACEMENT NON AUTORISÉ D'UN VÉHICULE AUTOMOBILE, VÉHICULE ÉQUIPÉ D'UN TEL SYSTÈME

(43) Date of publication of application: 16.06.2010
(73) Proprietor: Renault Trucks, 69800 Saint Priest (FR)
(72) Inventor: DRUTEL, Yves, F-69530 Orlienas (FR); VINCENT, Loïc, F-69200 Venissieux (FR)
(74) Representative: Putet, Gilles
(86) International application number: PCT/IB2007/004175
(87) International publication number: WO 2009/040606

(56) References cited:
- WO-A-03/072402
- DE-A1- 10 236 957
- US-A1- 2003 011 487
- US-A1- 2003 137 409

## Description

### TECHNICAL FIELD OF THE INVENTION

This invention concerns an electronic control system and a method for preventing unauthorized starting, use or movement of an automotive vehicle. This invention also concerns an automotive vehicle, in particular a truck, equipped with such a system.

### BACKGROUND OF THE INVENTION

Security systems are used to prevent unauthorized users to start and drive a vehicle. An engine management system of a truck usually acts on fuelling or cranking of its internal combustion engine or on electrical supply of its electrical motor for hybrid vehicles, in order to prevent one or both of these two functions to occur if a user does not carry with him a proper Customer Identification Device or "CID", such as an electronic or mechanical key. The electronic or mechanical key is provided with a transponder which allows recognition of the key by a dedicated CID interaction unit located within the vehicle passenger compartment or cab.

Such known techniques are globally efficient, in particular for passengers' cars. However, they can be ineffective in some circumstances for avoiding theft of the load of a truck. Indeed, it is possible to manually connect a starter of an engine through a source of power, which can make a truck move by a few meters, this distance being sufficient to allow thieves to access to the load of a truck or to disassemble a tractor from its trailer, which can then be hauled by another tractor and taken away.

DE-A-102.36.957 discloses a non encrypted method for communication between a theft safeguard module and an ID receiver.

### SUMMARY OF THE INVENTION

This invention aims at providing an electronic control system which is efficient to immobilize a vehicle such as a truck even if one tries to manually start its engine in order to move it on a small distance.

the invention can be implemented in an electronic control system for preventing unauthorized starting, use or movement of an automotive vehicle, said system comprising a customer identification device interaction unit adapted to communicate with a customer identification device in order to control access to and starting of a vehicle. This system is characterized in that:
- it comprises a main electronic data transmission network and at least two auxiliary electronic data transmission networks connected to said main network,
- said customer identification device interaction unit is connected to a first auxiliary network, and
- said system comprises data transmission means adapted to convey, via said main network, information data between said interaction unit and at least one control unit of said vehicle connected to a second auxiliary network.

The architecture of the system allows the customer identification device, or CID, interaction unit or "key interaction unit" to efficiently communicate with one or several remotely located control units, including units acting on the fuelling, cranking and/or braking systems of the truck, with highly secured communication protocols.

The control unit which is connected to the second auxiliary network advantageously controls an electronic park-brake of the vehicle, so that it is able to firmly immobilize said vehicle as long as a proper CID has not been recognized by the interaction unit. In such a case, this control unit can control or belong to an air pressure management sub-system of a vehicle which provides air to pneumatic brake components. Said control unit can also control electronic valves and/or actuators which do not belong to the air pressure management sub-system.

Alternatively, the control unit connected to the second auxiliary network can control a fuelling system or a cranking system of an internal combustion engine of the vehicle.

The data transmission means of the invention can include, for each auxiliary network, a gateway connecting this network to the main network.

According to a further aspect, the CID interaction unit belongs to a cab input/output module of the vehicle which forms a gateway for the first auxiliary network and includes at least another control unit which grants access to the vehicle cab or passenger compartment.

An automotive vehicle, in particular a truck, can be equipped with a system as mentioned here-above.

This invention concerns a method for preventing unauthorized starting, use or movement of an automotive vehicle, which can be implemented with a system as mentioned here-above. Such a method comprises at least the following steps, which are activated when a user actuates a park-brake in order to release its braking effort:
a) a park-brake control unit sends a first encrypted challenge signal to a sub-system including a CID interaction unit
b) said sub-system decrypts said first message,
c) if said interaction unit has identified a CID device as valid to start, use or move said vehicle, said sub-system sends to said park-brake control unit a second encrypted message including instructions to release said braking effort,
d) if said interaction unit has not identified a CID as valid to start, use or move the vehicle, said sub-system sends to said park-brake control unit a third message different from said second encrypted message,
e) said park-brake control unit decrypts said second or third message and releases said braking effort if and only if said second message is identified as including said instructions.

Advantageously, communication between said sub-system and said park-brake control unit takes place in said vehicle via a main electronic data transmission network and first and second auxiliary electronic data transmission networks connected respectively to said interaction unit and to said park-brake control unit.

The first signal is advantageously encrypted, on the basis of a random number, by using a logical function, and, when it decrypts said first signal in step b), said sub-system retrieves the value of said random number from said first signal. In such a case, the second signal can be encrypted on the basis of the retrieved value of the random number, by using a logical function and, when it decrypts the second signal in step e), the control unit retrieves the value of the random number from the second signal and compares this retrieved value to the original value used to encrypt the first signal.

Then, one can foresee that the second signal is considered to be a valid signal to relieve the braking effort if and only if the original value and the value retrieved in step e) are identical or linked by a predetermined relationship.

### BRIEF DESCRIPTION OF THE DRAWINGS

The invention will be better understood on the basis of the following description, which is given in correspondence with the annexed figures and as an illustrative example, without restricting the object of the invention which is defined by the appended claims. In the annexed figures:
- figure 1 is a general schematic view of a truck tractor including an electronic control system,
- figure 2 is a partial electric scheme of the electronic control system of the tractor of figure 1,
- figure 3 is a partial logical scheme of the system of figure 2, and

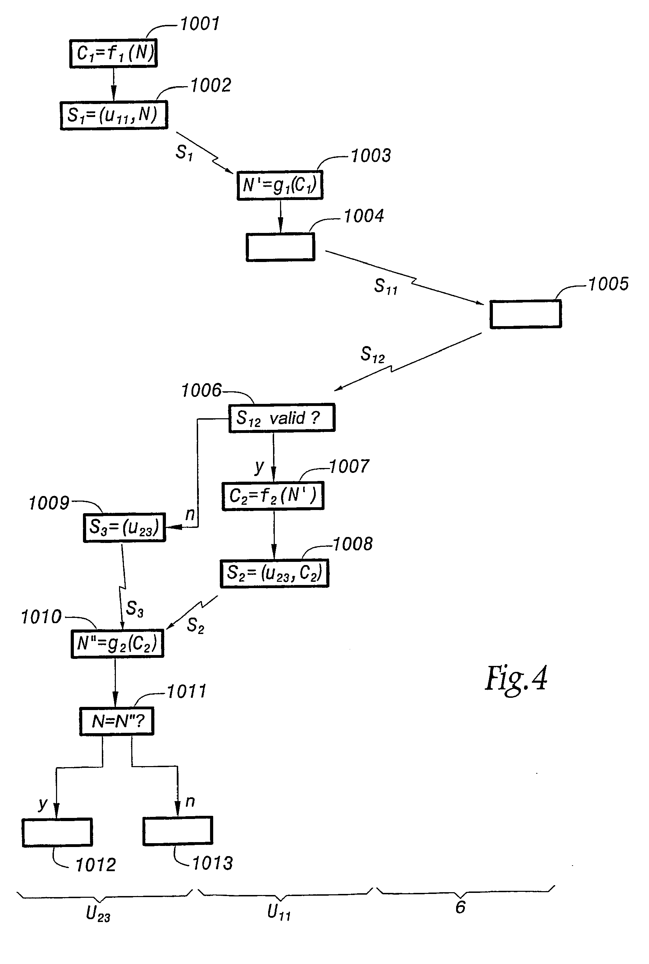

- figure 4 is a block diagram of a method according to the invention.

### DETAILED DESCRIPTION OF SOME EMBODIMENTS

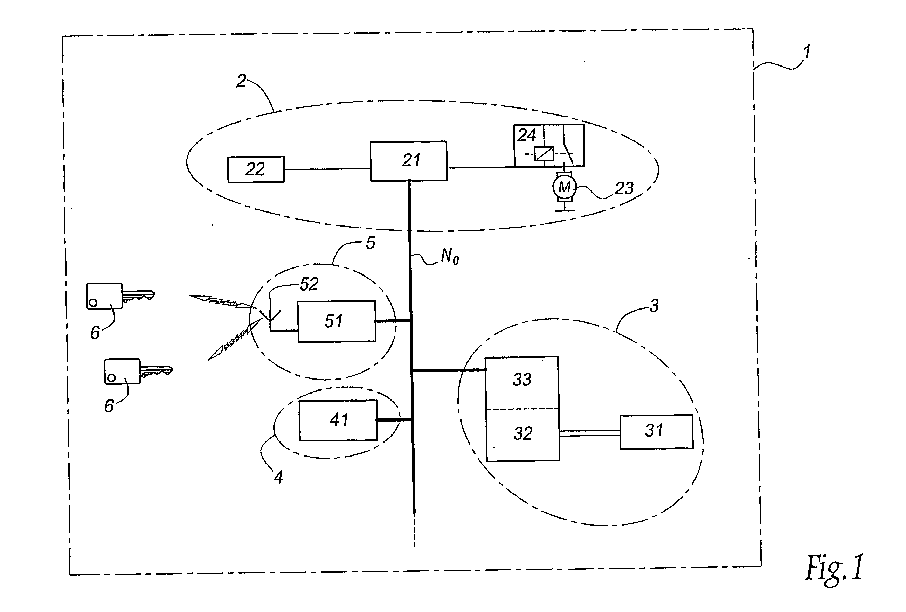

An electronic control system represented in figures 1 to 3 is mounted on an industrial vehicle, such as a tractor 1 adapted to haul a non-represented trailer. Tractor 1 is provided with an internal combustion engine 2, which is not represented in details and which is controlled by a dedicated electronic control unit 21.

Unit 21 controls, amongst others, an injector system 22 and a set of relays 24 which pilots a cranking electrical engine 23 adapted to rotate said engine 2 in order to make it start.

Tractor 1 is also provided with a braking system 3 which includes pneumatic braking components 31 adapted to block disks or hold drums fast in rotation with some of, and preferably all, the wheels of truck 1. Braking components 31 are fed with air under pressure from an air-pressure management sub-system 32 which is piloted by an electronic unit 33 comprising an electronic park-brake module. Items 32 and 33 can be integrated together, as explained in EP-A-1 406 805. They can also be separated, as mentioned in US-B-6 540 308. This invention applies to both arrangements of items 32 and 33.

Tractor 1 is equipped with an alarm 4 which includes non-represented sensors and an electronic control unit 41.

Tractor 1 is also provided with an access control system 5 which includes, amongst others, an immobilizer electronic control sub-module 51 coupled to an antenna 52 adapted to interact with one or several keys 6 which form customer identification devices or CID's for one or several users of tractor 1.

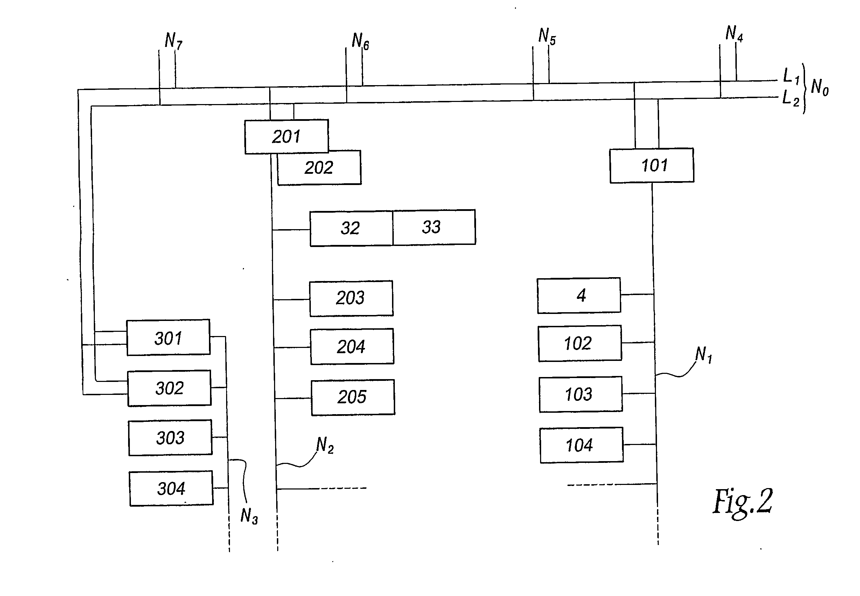

A bus runs in truck 1 and connects its different parts or sub-systems, including sub-systems 2 to 5. This bus forms a main electronic data transmission network No which allows information to be transmitted between electronic units and systems, in the form of electric signals. As shown in figure 2, network No is formed of two electric lines L₁ and L₂ fixed on tractor 1. Communication on network No and any other network connected to this network is made with an encoded protocol which can be according to the SAE J1939 standard. One can use a "challenge/response technique". Other standards can also be used to convey information with network No.

Several auxiliary networks or sub-nets N₁ to N₇ are connected to main network No, each of them being located in one specific part of tractor 1 or dedicated to one group of functions.

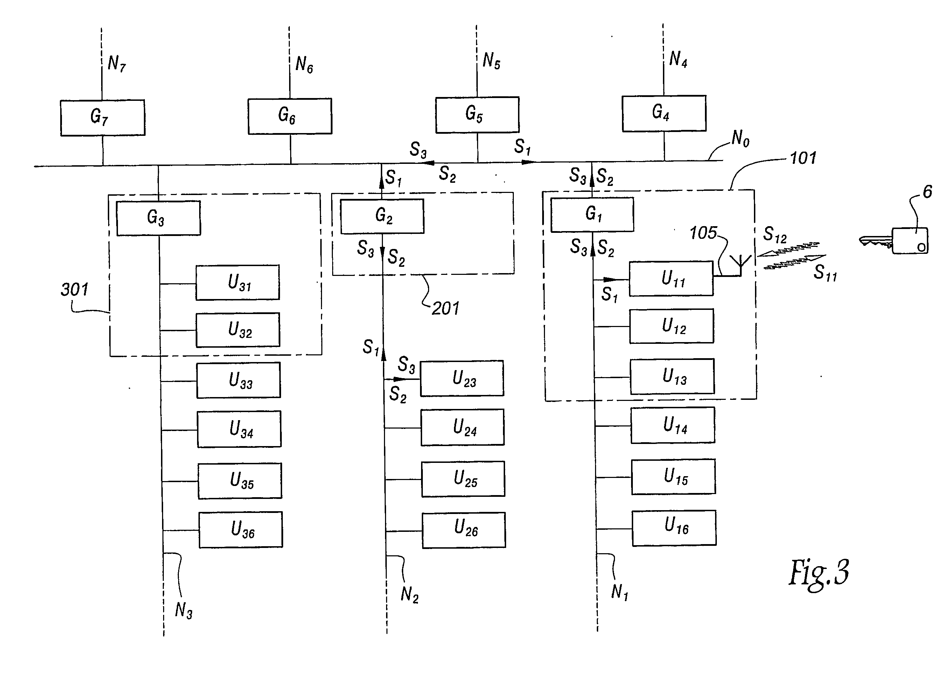

A first auxiliary network N₁ concerns the cab of tractor 1. It includes a cab input/output module or CIOM 101 which forms a gateway for the connection between networks No and N₁ and which also includes other functions to be detailed hereafter. Several electronic devices located in the cab of tractor 1 are connected via network N₁ to module 101. The alarm 4 of tractor 1 is connected to module 101 via network N₁. An electronic climate control (ECC) module 102, a secondary retaining system (SRS) module 103 and a safety module 104 are also connected to module 101 via network N₁. In fact, as shown on figure 3, module 101 forms a gateway G₁ between networks No and N₁. Module 101 also includes a first electronic unit U₁₁ which is provided with antenna 52 and which is supposed to interact with a key 6 in order to assess whether or not this key gives access to the cab of tractor 1 and allows to start and move this tractor. Key 6 is a customer identification device or CID and unit U₁₁ forms a CID interaction unit. Module 101 also includes another unit U₁₂ which pilots the door locks of the cabin. Module 101 also includes a third unit U₁₃ having switches adapted to control wipers, beams, cruise control, speed limiter and/or power take off (PTO) sub-assemblies. Units U₁₁ and U₁₂ form together sub-module 51.

Next to units U₁₁ to U₁₃, which belong to module 101, network N₁ also includes other units U₁₄, U₁₅, U₁₆ which belong to modules 102 to 104. The number and arrangement of units connected to network N₁ depends on the nature of the functions to be supported by this network.

Network N₁ allows units U₁₁ to U₁₆ to exchange data, whereas gateway G₁ allows these units to exchange data with units belonging to other networks, via network No.

A second auxiliary network or sub-net N₂ forms the chassis sub-net which is connected to network No by a vehicle master control unit or VMCU 201. A Fuse and Relay Center or FRC pass-through 202 is associated with VMCU 201 and allows control of power transmission within tractor 1. Air-pressure management sub-system 32 and electrical park-brake 33 are also connected to network N₂. A cab heater 203 is also connected to sub-net N₂, together with a tyre pressure monitoring sub-system 204 and a rear axle steering sub-system 205. As shown on figure 3, VMCU 201 forms a second gateway G₂ which connects networks No and N₂. Several electrical control units U₂₃ to U₂₆ are connected via network N₂ and can exchange electronic data. Unit U₂₃ belongs to and controls electrical park-brake 33. Unit U₂₃ can be integrated to and control the air-pressure management sub-system 32. It can also be used to control electronic valves, such as solenoid valves, and actuators which do not belong to sub-system 32 but also allow to control pneumatic components 31.

Units U₂₄ to U₂₆ respectively belong to and control items 203 to 205.

Data can be exchanged between units U₂₃ to U₂₆ via network N₂. Gateway G₂ allows these units to exchange data with network No.

A third auxiliary network or sub-net N3 is also connected to the main network N0 and forms the power train sub-net. Connection between auxiliary network N3 and main network N0 takes place in parallel via an engine management system (EMS) 301 and a transmission electronic unit 302. A urea distribution system 303 and an anti-pollution system 304, e.g. a NOx control system are also connected between them and to units 301 and 302 via network N3.

Either item 301 or 302 or both form a gateway G₃ which connects network N₃ to network No. On figure 3, one considers that EMS 301 comprises gateway G₃. Units U₃₁ and U₃₂ belong to EMS 301. They control respectively the fueling function, via injector system 22, and the cranking function, via sub-system 23 and 24, of engine 2. Several other control units U₃₃ to U₃₆ are connected to this network. Each unit U₃₃ to U₃₆ can, for example, be devoted to the function of one of items 301 to 304. Units U₃₁ to U₃₆ and gateway G₃ belong to ECU 21.

A Fleet Management System (FMS) network N₄, bodybuilder proprietary network N₅, a tachograph network N₆ and brake proprietary network N₇ are connected to the main network No via a respective dedicated gateway G₄ to G₇.

When a user wants to access tractor 1, he opens the door of the tractor cab with his key 6. Interaction between the door lock and the key can be contactless if the door lock is provided with an antenna adapted to excite a transponder located within key 6.

Gateways G₁ to G₇ do not have to know the content of the signals which go through them, provided that these gateways can read the format and receiving unit address of each signal.

When the user is onboard tractor 1 and tries to release a braking effort exerted by the pneumatic braking components 31 on the disks of tractor 1, unit U₂₃ sends a challenge signal S₁ to interaction unit U₁₁ in order to get the authorization to control electronic park-brake 33 in a way to release this effort. As shown on figure 3, transmission of challenge signal S₁ occurs via network N₂, gateway G₂, network No, gateway G₁ and network N₁.

The try of the driver to release the braking effort can be made by moving a park brake lever or park brake buttom.

If key 6 is present and is identified as authorizing the user to drive tractor 1, unit U₁₁ sends back to unit U₂₃ an authorization signal S₂ which is conveyed by network U₁, gateway G₁, network No, gateway G₂ and network N₂.

Therefore, the gateways G₁ and G₂, the main network No and the two auxiliary networks N₁ and N₂ of tractor 1 convey data between units U₁₁ and U₂₃ which have a dialog in order to allow or not operation of the brakes of tractor 1.

In order to enhance security for the communication between units U₂₃ and U₁₁, signals S₁ and S₂ are encrypted.

In a first step 1001 of the method of the invention, unit U₂₃ computes a first code C₁ on the basis of a random number N. A first logical or dedication function f₁ is used for the purpose of generating code C₁ on the basis of number N. In a second step 1002, unit U₂₃ creates the encrypted signal S₁, which includes the address u₁₁ of unit U₁₁ and code C₁, and send it on network N₁. In a third step 1003, signal S₁ is received by unit U₁₁ which is able to retrieve the value N' of number N from code C₁. For this purpose, unit 1003 uses a specific function g₁ which is stored in a memory of unit U₁₁ and which is specific to the pair of units U₁₁ and U₂₃, these units being associated in a pair upon building of tractor 1. In other words, unit U₁₁ is able to retrieve the value N' of N in step 1003 because it has been associated to unit U₂₃ upon construction of tractor 1.

When the value N' is retrieved, unit U₁₁ verifies if key 6 authorizes the user to release the brakes of tractor 1.

To this purpose, in a further step 1004, unit U₁₁ sends to key 6 an excitation signal S₁₁ which is supposed to be received by a transponder integrated within key 6. In a further step 1005, key 6 generates a response signal S₁₂ which is sent back to unit U₁₁ and which is analyzed in a step 1006 in order to assess whether or not it can be considered as a valid signal allowing to move the tractor 1. For instance, in step 1006, signal S₁₂ can be compared to a list of response signals allowing use of tractor 1.

One should note that the verification of the fact that key 6 allows to drive tractor 1, which takes place in steps 1004 and 1005, can occur in parallel to steps 1001 and 1002 and, in fact, at any time before step 1006. Interaction between unit U₁₁ and key 6 can occur in any way known from "keyless" or "contactless" access systems. This interaction can be based on a communication protocol which is independent from the one taking place via network No, between units U₁₁ and U₂₃.

If signal S₁₂ is found to be valid in step 1006, unit U₁₁ generates, in a further step 1007, a second code C₂ as a function of value N'. To this purpose, unit U₁₁ uses a logical function or dedication function f₂.

Then, code C₂ is incorporated by unit U₁₁ into encrypted electronic signal S₂ which incorporates the address U₂₃ of unit U₂₃ and this second code C₂. This takes place in a further step 1008. Signal S₂ is then sent back to unit U₂₃ via network N₁, gateway G₁ network No, gateway G₂ and network N₂.

If signal S₁₂ is found not be valid, then unit U₁₁ proceeds to another step 1009 where it generates a signal S₃ incorporating the address u₂₃ of unit U₂₃ and which is different from signal S₂ insofar as it does not incorporate second code C₂. This signal S₃ is then sent to unit U₂₃, in the same way as signal S₂.

When it receives signal S₂ or signal S₃, unit U₂₃ tries to retrieve the value N" of number N from code C₂ in a further step 1010. In step 1010, unit U₂₃ uses a logical function g₂ to compute the value N" of N on the basis of code C₂. If signal S₃ is received instead of signal S₂, it is not possible for unit U₂₃ to retrieve a value N" which is equal to number N.

In steps 1003 and 1010, the value N' or N" of number N is retrieved by "subtracting" or otherwise reverse-computing this value from the encrypted code C₁ or C₂, which is possible since functions f₁ and g₁ are matched and since functions f₂ and g₂ are also matched.

Then in a further step 1011, the value N" retrieved at step 1010 is compared to the value of N used for the computation of step 1001. If these two values are identical, then unit U₂₃ considers that signal S₂ received from unit U₁ is an authorization signal and, in a further step 1012, it controls electrical park-brake 33 to release the braking effort due to components 31. If, on the contrary, the value N" retrieved at step 1010 does not correspond to the original value of N, then unit U₂₃ holds the braking effort in a further step 1013.

In the examples listed here-above, the comparison at step 1011 relates to the identity of the value N" retrieved at step 1010 and the original value N of the random number. However, according to another embodiment of the invention, the successive operations obtained via functions f₁, g₁, f₂ and g₂ can lead to the fact that the value obtained at step 1010 is not equal to the original value of random number N but has a predetermined relationship with this original value. For example, this value retrieved at step 1010 can be the double of the original value of random number N, this retrieved value being divided by two prior to the comparison of step 1011.

The architecture of the electronic system and the successive steps of the method enhance the safety of the communication between units U₁₁ and U₂₃.

The invention can also be used to enhance communication between other units of the system, in particular between unit U₁₁ and one of units U₃₁ and U₃₂, which allows efficient control of the fuelling and cranking of engine 2. Similarly, the invention can be used for the interaction between unit U₁₁ and a one of units U₃₃ to U₃₆ or any logical units connected to networks N₄ to N₇.

Actually, some of the units and gateways represented on figure 3 can be built together on a unique circuit board. This is the case for units U₁₁ to U₁₃ and gateway G₁ which constitute together the CIOM 201.

The invention has been represented when used for a tractor of a truck. It is actually possible to use the invention for any kind of truck, including a truck with a rigid body supporting a storage compartment. It is also possible to use the invention with a passenger car. In such a case, what has been described here-above as a cab corresponds to the passenger compartment of the vehicle.

The invention has been represented with a CID in the form of a mechanical key. It can also be used with a CID having the shape of a credit card.

## Claims

1. A method for preventing unauthorized starting, use or movement of an automotive vehicle (1), comprising at least the following steps which are activated when a user actuates a park-brake (3) in order to release its braking effort:
a) a park-brake control unit (U₂₃) sends (1002) a first encrypted challenge signal (S₁) to a sub-system (101) including a customer identification device interaction unit (U₁₁), the method being **characterised by** the following steps:
b) said sub-system (101) decrypts (1003) said first message,
c) if said interaction unit (U₁₁) has identified a customer identification device (6) as valid to start, use or move said vehicle, said sub-system sends (1008) to said park-brake control unit a second encrypted message (S₂) including instructions (C₂) to release said braking effort,
d) if said interaction unit (U₁₁) has not identified a customer identification device (6) as valid to start, use or move the vehicle, said sub-system sends (1009) to said park-brake control unit a third message (S₃) different from said second encrypted message,
e) said park-brake control unit (U₁₁) decrypts (1010) said second or third message and releases said braking effort if and only if said second message is identified as including said instructions (N=N").

2. Method according to claim 1, **characterized in that** communication between said sub-system (101) and said park-brake control unit (U₂₃) takes place in said vehicle (1) via a main electronic data transmission network (N₀) and first and second auxiliary electronic data transmission networks (N₁, N₂) connected respectively to said interaction unit (U₁₁) and to said park-brake control unit (U₂₃).

3. Method according to one of claims 1 or 2, **characterized in that** said first signal (S₁) is encrypted (1001, 1002), on the basis of a random number (N), by using a logical function (f₁) and, when it decrypts (1003) said first signal in step b), said sub-system retrieves the value (N') of said random number from said first signal (S₁).

4. Method according to claim 3, **characterized in that** said second signal (S₂) is encrypted (1007, 1008), on the basis of said retrieved value (N') of said random number (N), by using a logical function (f₂), and, when it decrypts (1010) said second signal in step e), said control unit (U₂₃) retrieves the value (N") of said random number from said second signal (C₂) and compares (1011) said retrieved value (N") to the original value (N) used to encrypt said first signal.

5. Method according to claim 4, **characterized in that** said second signal (S₂) is considered to be a valid signal to release said braking effort if and only if said original value (N) and the value (N") retrieved in step e) are identical or linked by a predetermined relationship.

## Patentansprüche

1. Verfahren zur Verhinderung eines unautorisierten Startens, Verwendens oder Bewegens eines Kraftfahrzeugs (1) mit wenigstens den folgenden Schritten, die aktiviert werden, wenn ein Bediener eine Parkbremse (3) betätigt, um ihre Bremskraft zu lösen:
a) eine Parkbremsensteuereinheit (U₂₃) sendet (1002) ein erstes verschlüsseltes Abfragesignal (S₁) an ein Untersystem (101), das eine Kundenidentifikationsvorrichtungs-Interaktionseinheit (U₁₁) aufweist, wobei das Verfahren durch die folgenden Schritte gekennzeichnet ist:
b) das Untersystem (101) entschlüsselt (1003) die erste Nachricht,
c) wenn die Interaktionseinheit (U₁₁) eine Kundenidentifikationsvorrichtung (6) zum Starten, zum Verwenden oder zur Bewegung des Fahrzeugs als gültig identifiziert hat, sendet (1008) das Untersystem an die Parkbremsensteuereinheit eine zweite verschlüsselte Nachricht (S₂) einschließlich Instruktionen (C₂) zum Lösen der Bremskraft,
d) wenn die Interaktionseinheit (U₁₁) eine Kundenidentifikationsvorrichtung (6) zum Starten, zum Verwenden oder zur Bewegung des Fahrzeugs als nicht gültig identifiziert hat, sendet (1009) das Untersystem an die Parkbremsensteuereinheit eine dritte Nachricht (S₃), die sich von der zweiten verschlüsselten Nachricht unterscheidet,
e) die Parkbremsensteuereinheit (U₁₁) entschlüsselt (1010) die zweite oder dritte Nachricht und löst die Bremskraft, wenn und nur wenn die zweite Nachricht als die Instruktionen (N=N") enthaltend identifiziert wurde.

2. Verfahren nach Anspruch 1, **dadurch gekennzeichnet, dass** eine Kommunikation zwischen dem Untersystem (101) und der Parkbremsensteuereinheit (U₂₃) in dem Fahrzeug (1) über ein Hauptelektronikdatenübertragungsnetzwerk (N₀) und erste und zweite Hilfselektronikdatenübertragungsnetzwerke (N₁, N₂) stattfindet, die mit der Interaktionseinheit (U₁₁) beziehungsweise der Parkbremsensteuereinheit (U₂₃) verbunden sind.

3. Verfahren nach einem der Ansprüche 1 oder 2, **dadurch gekennzeichnet, dass** das erste Signal (S₁) auf der Basis einer Zufallszahl (N) mittels Verwendung einer logischen Funktion (f₁) verschlüsselt (1001, 1002) wird, und das Untersystem den Wert (N') der Zufallszahl von dem ersten Signal (S₁) abruft, wenn es das erste Signal in Schritt b) entschlüsselt (1003).

4. Verfahren nach Anspruch 3, **dadurch gekennzeichnet, dass** das zweite Signal (S₂) auf der Basis des abgerufenen Werts (N') der Zufallszahl mittels Verwendung einer logischen Funktion (f₂) verschlüsselt (1007, 1008) wird, und die Steuereinheit (U₂₃) den Wert (N") der Zufallszahl von dem zweiten Signal (C₂) abruft, wenn sie das zweite Signal in Schritt e) entschlüsselt (1010), und den abgerufenen Wert (N") mit dem ursprünglichen Wert (N) vergleicht (1011), der zur Verschlüsselung des ersten Signals verwendet wird.

5. Verfahren nach Anspruch 4, **dadurch gekennzeichnet, dass** das zweite Signal (S₂) als gültiges Signal betrachtet wird, um die Bremskraft aufzulösen, wenn und nur wenn der ursprüngliche Wert (N) und der in Schritt e) abgerufene Wert (N") identisch oder durch eine vorher bestimmte Beziehung miteinander verknüpft sind.

## Revendications

1. Procédé pour empêcher le démarrage, l'utilisation ou le déplacement non autorisé(e) d'un véhicule automobile (1), le procédé comportant au moins les étapes ci-dessous, qui sont activées lorsqu'un utilisateur actionne un frein de stationnement (3) pour supprimer son action de freinage :
a) une unité (U₂₃) de commande des freins de stationnement envoie (1002) un premier signal crypté de vérification (S₁) à un sous-système (101) comprenant une unité (U₁₁) d'interaction avec un dispositif d'identification de client,
le procédé étant **caractérisé par** les étapes suivantes :
b) ledit sous-système (101) décrypte (1003) ledit premier message,
c) si ladite unité d'interaction (U₁₁) a déterminé qu'un dispositif (6) d'identification de client est habilité pour le démarrage, l'utilisation ou le déplacement dudit véhicule, ledit sous-système envoie (1008) à ladite unité de commande des freins de stationnement un deuxième message crypté (S₂) qui contient des instructions (C₂) amenant la suppression de ladite action de freinage,
d) si ladite unité d'interaction (U₁₁) a déterminé qu'un dispositif (6) d'identification de client n'est pas habilité pour le démarrage, l'utilisation ou le déplacement du véhicule, ledit sous-système envoie (1009) à ladite unité de commande des freins de stationnement un troisième message (S₃) différent dudit deuxième message crypté,
e) ladite unité (U₁₁) de commande des freins de stationnement décrypte (1010) ledit deuxième ou ledit troisième message et supprime ladite action de freinage si et seulement si elle a déterminé que ledit deuxième message contient lesdites instructions (N = N'').

2. Procédé selon la revendication 1, **caractérisé en ce que** la communication entre ledit sous-système (101) et ladite unité (U₂₃) de commande des freins de stationnement s'effectue dans ledit véhicule (1) par l'intermédiaire d'un réseau électronique principal (N₀) de transmission de données et d'un premier et un deuxième réseau électronique auxiliaire (N₁, N₂) de transmission de données raccordés respectivement à ladite unité d'interaction (U₁₁) et à ladite unité (U₂₃) de commande des freins de stationnement.

3. Procédé selon l'une des revendications 1 ou 2, **caractérisé en ce que** ledit premier signal (S₁) est crypté (1001, 1002) par recours à une fonction logique (f₁) sur la base d'un nombre aléatoire (N) et **en ce que** lorsque ledit sous-système décrypte (1003) ledit premier signal à l'étape b), il récupère la valeur (N') dudit nombre aléatoire dans ledit premier signal (S₁).

4. Procédé selon la revendication 3, **caractérisé en ce que** ledit deuxième signal (S₂) est crypté (1007, 1008) par recours à une fonction logique (f₂) sur la base de ladite valeur (N') dudit nombre aléatoire (N) qui a été récupérée et **en ce que** lorsque ladite unité de commande (U₂₃) décrypte (1010) ledit deuxième signal à l'étape e), elle récupère la valeur (N'') dudit nombre aléatoire dans ledit deuxième signal (C₂) et compare (1011) ladite valeur récupérée (N'') à la valeur initiale (N) utilisée pour crypter ledit premier signal.

5. Procédé selon la revendication 4, **caractérisé en ce que** ledit deuxième signal (S₂) est considéré comme étant un signal habilité à amener la suppression de ladite action de freinage si et seulement si ladite valeur initiale (N) et la valeur (N'') récupérée à l'étape e) sont identiques ou reliées par une relation prédéterminée.
